# EUROPEAN PATENT SPECIFICATION

(11) **EP 2 786 018 B1**
(45) Date of publication and mention of the grant of the patent: **07.01.2015**
(21) Application number: 12737898.2
(22) Date of filing: 29.06.2012
(51) Int. Cl.: F03D 9/00, F03D 11/02

(54) **POWER GENERATING APPARATUS OF RENEWABLE ENERGY AND METHOD OF ATTACHING A HYDRAULIC PUMP THEREOF**
STROMERZEUGUNGSVORRICHTUNG AUS ERNEUERBARER ENERGIE UND VERFAHREN ZUR BEFESTIGUNG EINER HYDRAULISCHEN PUMPE
APPAREIL DE PRODUCTION D'ÉNERGIE ÉLECTRIQUE À PARTIR D'UNE ÉNERGIE RENOUVELABLE ET PROCÉDÉ DE FIXATION D'UNE POMPE HYDRAULIQUE DE CELUI-CI

(30) Priority: 30.11.2011 WO PCT/JP2011/006695
(43) Date of publication of application: 08.10.2014
(73) Proprietor: Mitsubishi Heavy Industries, Ltd., Tokyo 108-8215 (JP)
(72) Inventor: KAMEDA, Takuro, Tokyo 108-8215 (JP); FURUKAWA, Syogo, Tokyo 108-8215 (JP); ROBERTSON, Alasdair, Loanhead Midlothian Lothian EH20 9TB (GB); STEIN, Uwe, Loanhead Midlothian Lothian EH20 9TB (GB); DODSON, Henry, Loanhead Midlothian Lothian EH20 9TB (GB)
(74) Representative: Intès, Didier Gérard André
(86) International application number: PCT/JP2012/004219
(87) International publication number: WO 2013/080399

(56) References cited:
- WO-A2-2011/104544
- GB-A- 2 477 997
- US-A1- 2010 032 959

## Description

### Technical Field

The present invention relates to a power generating apparatus of renewable energy type which generates power from renewable energy and a method of attaching a hydraulic pump thereof. The power generating apparatus of renewable energy type is a generator utilizing renewable energy such as wind, tidal current, ocean current and river current and, for instance, includes a wind turbine generator, a tidal generator, an ocean current generator, a river current generator or the like.

### Background Art

In recent years, from a perspective of preserving the environment, it has become popular to use a power generating apparatus of renewable energy type such as a wind turbine generator utilizing wind power and a power generating apparatus utilizing tidal current, ocean current or river current. In power generating apparatus of renewable energy type, kinetic energy of the wind, tidal current, river current or the like is converted to rotation energy of the rotor and rotational energy of the rotor is then converted into electric power by the generator.

As the power generating apparatus of renewable energy type, a power generating apparatus using a hydraulic transmission with a combination of a hydraulic pump and a hydraulic motor is known.

For instance, described in Patent Literature 1 is a wind turbine generator using a hydraulic transmission with a combination of a hydraulic pump driven by rotation of a rotor and a hydraulic motor connected to a generator. In Patent Literature 1, as one example structure for attaching the hydraulic pump to the rotor, a pump shaft of the hydraulic pump is fastened to an end of the rotor (see Fig.4C of Patent Literature 1).

### Citation List

### Patent Literature

PTL 1: US 2010/0032959 A

### Summary

### Technical Problem

However, in the power generating apparatus of renewable energy type described in Patent Literature 1, the pump shaft extending straight along the axial direction of the rotor is fastened to the rotor with use of the fastening member (a bolt) penetrating through the entire length thereof. This makes it difficult to achieve proper tensile force of the fastening member during attaching of the hydraulic pump. Driven by the need to improve the power generation efficiency, recent power generating apparatuses of renewable energy type have tended to have both larger diameter and longer pumps shafts. Thus, it is anticipated in the structure for attaching the hydraulic pump described in Patent Literature 1, that it becomes even more difficult to achieve proper tensile force of the fastening member.

In view of the above issues, it is an object of at least some embodiments of the present invention to provide a power generating apparatus of renewable energy type and a method of attaching a hydraulic pump thereof, capable of easily achieving proper tensile force when attaching the pump shaft to the rotation shaft.

### Solution to Problem

According to embodiments of the present invention, a power generating apparatus of a renewable energy type which generates power from renewable energy, comprises: at least one blade; a hub which is rotated with the at least one blade by the renewable energy received via the at least one blade; a rotation shaft which is coupled to the hub; a hydraulic pump which comprises a pump shaft coupled to an end of the rotation shaft that is on a side farther from the hub, and a pressurized-oil production mechanism attached to the pump shaft and producing pressurized oil by rotation of the pump shaft, a hydraulic motor which is driven by the pressurized oil from the hydraulic pump; and a generator which is driven by the hydraulic motor. Further, the pump shaft includes a cylindrical part and an inward flange, the cylindrical part supporting the pressurized-oil production mechanism on an outer circumferential side and having an interior space on an inner circumferential side, the inward flange being disposed on a side nearer to the rotation shaft than the cylindrical part. The rotation shaft and the pump shaft are coupled to each other by at least one fastening member extending in a fastening direction from the interior space toward the rotation shaft, the at least one fastening member penetrating the inward flange to be partially inserted into the end of the rotation shaft.

In the power generating apparatus of the renewable energy type, the pump shaft includes the inward flange disposed on the side nearer to the rotation shaft than the cylindrical part for supporting the pressurized-oil production mechanism on the outer circumferential side. And the pump shaft is connected to the rotation shaft by at least one fastening member extending in the fastening direction from the interior space on the inner circumferential side of the cylindrical part toward the rotation shaft. Thus, the at least one fastening member for fastening the pump shaft to the rotation shaft can be as short as possible but enough to penetrate through the inward flange of the pump shaft and reach a fastening depth in the end of the rotation shaft. This makes it easy to achieve proper tensile force of the fastening member when attaching the pump shaft to the rotation shaft.

According to at least one embodiment, the power generating apparatus of the renewable energy type further comprises: at least one bearing which supports the rotation shaft rotatably. The rotation shaft may have an approximately constant diameter between the pump shaft and one of the at least one bearing nearest to the pump shaft (the rotation shaft may be flangeless).
As a result, it is possible to use a simple assembly method for the bearings, by inserting the rear bearing from the end of the rotation shaft while avoiding the size increase of the rear bearing.
Further, the at least one bearing may comprise a front bearing disposed nearer to the hub and a rear bearing disposed nearer to the pump shaft. A bearing housing of the front bearing and a bearing housing of the rear bearing may be connected to each other and held in place by a tubular connection frame. The tubular connection frame maintains concentricity of the bearings in the bearing housings. Thus, even if a complex load (including bending load) is generated by input fluctuation from a renewable energy source on the rotation shaft, it is possible to prevent the situation where the center of each of the bearings is displaced and the load component of an unexpected direction acts on the bearings, in order to increase bearing lifetime.

According to a further embodiment, the power generating apparatus of the renewable energy type further comprises: a friction shim which is arranged between the end surface of the rotation shaft and the inward flange and which has at least one hole that the at least one fastening member penetrates.
As a result, the fastening force of the at least one fastening member gives a large friction force by the friction shim and the large torque from the rotation shaft can be transmitted to the pump shaft. Importantly there is no slip between the rotation shaft and the pump shaft.

Further, the at least one fastening member may include a plurality of fastening members disposed in a staggered fashion in a fastening area where the inward flange and the end surface of the rotation shaft are fastened together, and the at least one hole of the friction shim may include a plurality of holes that are disposed in a staggered fashion corresponding to the fastening members. The friction shim may be an annular member formed of a plurality of segments into which the friction shim is divided at dividing lines each of which inclines with respect to a radial direction to avoid the holes.
In this manner, with use of the friction shim in a form of an annular member which is dividable into a plurality of segments along the dividing line, production of the friction shim is facilitated. In an exemplary embodiment, the friction shim may have a coefficient of friction greater than 0.5 for large Wind Turbine Generators (e.g., 7MW). Further, by arranging the plurality of fastening members in a staggered fashion in the fastening area where the inward flange and the end surface of the rotation shaft are fastened together, a larger number of the fastening members can be provided. A larger number of fastening members allows higher clamping force, leading to increased friction force provided by the friction shim. Furthermore, by inclining the dividing lines for dividing the friction shim (the annular member) into a plurality of the segments, with respect to the radial direction to avoid the holes arranged in the staggered fashion, it is possible to provide a larger number of the fastening members in each of the segments. Therefore, the friction force provided by the friction shim can be further improved.

The friction shim may have an outer diameter not less than 1 meter and an inner diameter not less than 0.5 meter.
By setting the outer diameter of the friction shim to at least 1 meter, the size and the number of the fastening members (a bolt) can be increased. Therefore, in a large power generating apparatus of renewable energy type of comparatively large scale, for instance, 3MW or greater, sufficient fastening force is generated with respect to large torque applied from the renewable energy source and it is possible to increase a shear force by the friction. In a similar manner, by setting the inner diameter of the friction shim to at least 0.5 meter, it is possible to increase the size and the number of the fastening members (the bolt), and sufficient fastening force is generated with respect to large torque received from the renewable energy source and thus, it is possible to increase a shear force by the friction. By setting the inner diameter relatively large, i.e. at least 0.5 meter and forming the inward flange and the end of the rotation shaft thin, it is possible to reduce weight of the shaft system.

The friction shim may have diamond particles held on both surfaces, which further enhances the friction force provided by the friction shim.

According to a further embodiment, the pressurized-oil production mechanism may include: a ring cam attached to an outer circumference of the cylindrical part; a plurality of pistons arranged radially around the ring cam and caused to reciprocate by the ring cam; and a cylinder block including cylinders that form working chambers for producing pressurized oil with each of the pistons. The pressurized-oil production mechanism is housed in a pump housing which includes a cylindrical shell covering an outer periphery of the cylinder block and a pair of end plates provided on both ends of the cylindrical shell, respectively. The pair of end plates may include a first end plate that is nearer to the hub and a second end plate that is farther from the hub, the first end plate being supported via a first pump bearing by a bearing-holding cylindrical surface formed in the inward flange, the second end plate being supported via a second pump bearing by the outer circumference of the cylindrical part.
As described above, in some embodiments, the pump shaft includes the cylindrical part and the inward flange, the cylindrical part supporting the pressurized-oil production mechanism on an outer circumferential side and having an interior space on an inner circumferential side, the inward flange being disposed on a side nearer to the rotation shaft than the cylindrical part, and the rotation shaft and the pump shaft are coupled to each other by at least one fastening member for fastening the inward flange to an end surface of the end of the rotation shaft. In this case, with use of the pressurized-oil production mechanism having the above structure, by arranging the working chambers formed by the pistons and the cylinders around the cylindrical part of the pump shaft having relatively large diameter, a larger number of the working chambers can be arranged and it is possible to finely regulate the displacement of the hydraulic pump. By providing as part of the pump shaft, the inward flange fastened to the end surface of the rotation shaft, the rotation shaft can be configured with a smaller diameter than the cylindrical part of the pump shaft. By reducing the size of the rotation shaft, the size of the bearings for supporting the rotation shaft can also be reduced, thereby further reducing the total weight thereof.

According to a further embodiment, the first end plate may include an inner circumferential part which is on an inner circumferential side and to which an outer ring of the first pump bearing is fixed and an outer circumferential part which extends outward in a radial direction from the inner circumferential part toward the cylindrical shell, and the inner circumferential part may include an inner passage in which the pressurized oil produced in the working chambers flows and the inner circumferential part is formed axially thicker than the outer circumferential part.
In this manner, by arranging the inner passage in the inner circumferential part of the first end plate, which has a circumferential length shorter than that of the outer circumferential part of the first end plate, the thickness of the first end plate surrounding the inner passage can be increased while suppressing the weight increase of the first end plate. Thus, it is possible to achieve durability of the first end plate against the pressurized oil, as well as reduction in weight of the first end plate. More specifically, the inner circumferential part of the first end plate is formed axially thicker around the inner passage so as to withstand the high pressure of the pressurized oil but the circumferential length of the inner circumferential part remains relatively short. Thus, the overall weight of the first end plate does not increase significantly. Therefore, it is possible to suppress the weight of the first end plate and also to improve the durability of the first end plate with respect to the pressurized oil.

Further, the power generating apparatus of the renewable energy type may further comprise a nacelle for housing at least the rotation shaft and the hydraulic pump, and the pump housing may be supported on a nacelle side via an arm part connected to at least the inner circumferential part of the first end plate.
In this manner, by supporting the pump housing on the nacelle side via the arm part, the pump housing trying to rotate with the pump shaft is immobilized in the rotation direction. Further, by connecting the arm part to at least the inner circumferential part of the first end plate formed thicker than the outer circumferential part, the pump housing can be firmly supported via the arm part on the nacelle side.

Furthermore, the power generating apparatus of the renewable energy type may further comprise a pump support which supports the pump housing to the nacelle side via the arm part so as to prevent the pump housing from rotating with the pump shaft while allowing for displacement of the pump housing in a direction perpendicular to an axis of the pump shaft.
The rotation shaft of the power generating apparatus of the renewable energy type, in general, is subject to bending force due to large load from an energy flow of the renewable energy (wind load in the case of the wind turbine generator). Here, if the pump housing is rigidly fixed to the nacelle, the rotation shaft is immovable with respect to the nacelle. Thus, the bearing (a main shaft bearing) for supporting the rotation shaft rotatably by the nacelle or the pump bearing of the hydraulic pump is subject to concentrated load due to the bending of the rotation shaft.
In view of this, by configuring the pump support to prevent the pump housing from rotating with the pump shaft while allowing for displacement of the pump housing in a direction perpendicular to an axis of the pump shaft, it is possible to reduce the concentrated load on the bearings (the main shaft bearing and the pump bearing) resulting from the bending of the rotation shaft.

The power generating apparatus of the renewable energy type may further comprise a pressurized-oil piping which connects an outlet of the hydraulic pump to an inlet of the hydraulic motor and in which the pressurized oil supplied from the hydraulic pump to the hydraulic motor flows. The pressurized piping may be at least partially formed by flexible piping.
In the case of allowing for displacement of the pump housing in the direction perpendicular to the axis of the pump shaft, relative displacement occurs between the hydraulic pump attached to the rotation shaft and the hydraulic motor not directly connected to the rotation shaft. By forming the entire piping connecting the hydraulic pump and the hydraulic motor by a rigid piping, the piping becomes significantly loaded.
In view of this, the pressurized piping is at least partially formed by a flexible piping so as to absorb the relative displacement between the hydraulic pump and the hydraulic motor by the flexible piping and to reduce the load on the pressurized piping. Further, the pressurized oil flowing in the pressurized piping is at high temperature and heat expansion of the pressurized piping generates heat stress. However, by forming the pressurized piping at least partially by the flexible piping, the heat expansion of the pressurized piping can be absorbed and generation of the heat stress can be suppressed by the flexible piping.

The first pump bearing and the second pump bearing may be thrust bearings.

According to a further embodiment, the power generating apparatus of the renewable energy type may further include: a nacelle which houses at least the rotation shaft, the hydraulic pump and the hydraulic motor; and a placement table supported by the nacelle via at least one of an elastic member and a damping mechanism. The hydraulic motor is placeable on the placement table.
In this manner, by placing the hydraulic motor on the placement table supported by the nacelle via at least one of an elastic member and a damping mechanism, it is possible to damp the vibration of the hydraulic motor while driving and thus, the hydraulic motor can be supported by the nacelle in a stable manner.

According to a further embodiment, an inner circumferential surface of the cylindrical part may taper so that a thickness of the cylindrical part becomes smaller with distance from the hub.
The pump shaft is desirably lightweight while having enough strength to withstand the large torque inputted from the rotation shaft. Thus, by forming the inner circumferential surface of the cylindrical part to taper, an area of the cylindrical part nearer to the rotation shaft, which requires relatively high strength, is formed thick, whereas an area of the cylindrical part on the side farther from the rotation shaft, which requires relative low strength, may be formed thin so as to achieve both the strength and the weight saving of the pump shaft.

According to a further embodiment, the power generating apparatus of the renewable energy type may further comprise a slip ring which is provided in the interior space of the cylindrical part and which electrically connects a stationary-side cable to a rotary-side cable that rotates with the rotation shaft.
The slip ring can be arranged while utilizing the interior space of the cylindrical part on the inner circumferential side. Further, the slip ring is configured to allow electrical connection between a stationary-side cable and a rotary-side cable. For instance, the slip ring may be provided to electrically connect the device arranged near the hub (such as a pitch drive unit and a blade abnormality monitoring unit) to the device arranged in the nacelle (such as a control unit and a power unit).

Further, the above power generating apparatus of the renewable energy type may be a wind turbine generator for generating power from wind as a form of renewable energy. The power generating apparatus of the renewable energy type may be other types of generator such as a tidal generator, an ocean current generator and a river current generator.

A further embodiment of the present invention relates to a method of attaching a hydraulic pump of a power generating apparatus of a renewable energy type in which a hub and a rotation shaft coupled to the hub are rotated with at least one blade by renewable energy received via the at least one blade and rotation of the rotation shaft is inputted to a generator via a hydraulic transmission including a hydraulic pump and a hydraulic motor to generate power, the hydraulic pump comprising a pressurized-oil production mechanism which produces pressurized oil and a pump shaft which holds the pressurized-oil production mechanism and which includes a cylindrical part and an inward flange, the cylindrical part supporting the pressurized-oil production mechanism and having an interior space on an inner circumferential side, the inward flange being disposed on an end of the cylindrical part. The method of attaching the hydraulic pump comprise the steps of: placing the pump shaft so that the inward flange opposes an end surface of an end of the rotation shaft that is farther from the hub; and connecting the pump shaft to the rotation shaft by partially inserting at least one fastening member into the end of the rotation shaft to penetrate the inward flange and extend in a fastening direction from the interior space toward the rotation shaft.

In this manner, by connecting the pump shaft to the rotation shaft using at least one fastening member extending in the fastening direction from the interior space toward the rotation shaft, the at least one fastening member for fastening the pump shaft to the rotation shaft can be as short as possible but enough to penetrate through the inward flange of the pump shaft and reach a fastening depth in the end of the rotation shaft. This makes it easy to achieve proper tensile force of the fastening member when attaching the pump shaft to the rotation shaft.

### Advantageous Effects of Invention

According to at least some-embodiments of the present invention, the at least one fastening member for fastening the pump shaft to the rotation shaft can be as short as possible but enough to penetrate through the inward flange of the pump shaft and reach a fastening depth in the end of the rotation shaft. Thus, it is easy to achieve proper tensile force of the fastening member when attaching the pump shaft to the rotation shaft.

### Brief Description of Drawings

[fig.1]Fig. 1 is a schematic view of an overall structure of a wind turbine generator in relation to an embodiment.
[fig.2]Fig. 2 is an oblique perspective view of an exemplary structure inside a nacelle of the wind turbine generator in relation to an embodiment.
[fig.3]Fig. 3 is an oblique perspective view of an exemplary structure of a nacelle base in relation to an embodiment.
[fig.4]Fig. 4 is a cross-sectional view taken along a line A-A of Fig.2.
[fig.5]Fig. 5 is an illustration around a fastening section of a rotation shaft and a pump shaft in relation to an embodiment.
[fig.6]Fig. 6 is an illustration of an exemplary structure of a friction shim.
[fig.7]Fig. 7 is a cross-sectional view of a pressurized-oil production mechanism along a radial direction of a hydraulic pump in relation to an embodiment.
[fig.8]Fig. 8 is a cross-sectional view of the pressurized-oil production mechanism along an axial direction of the hydraulic pump in relation to an embodiment.
[fig.9]Fig. 9 is an illustration of a state in which a first end plate is fixed to a nacelle side.
[fig.10]Fig. 10 is an illustration of a state in which bearing housings are connected by a tubular connection frame.

### Description of Embodiments

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

In following embodiments, a wind turbine generator is described as one embodiment of a power generating apparatus of renewable energy type. However, this is not limitative and the present invention is applicable to other types of power generating apparatus of renewable energy type such as a tidal generator, an ocean current generator and a river current generator.

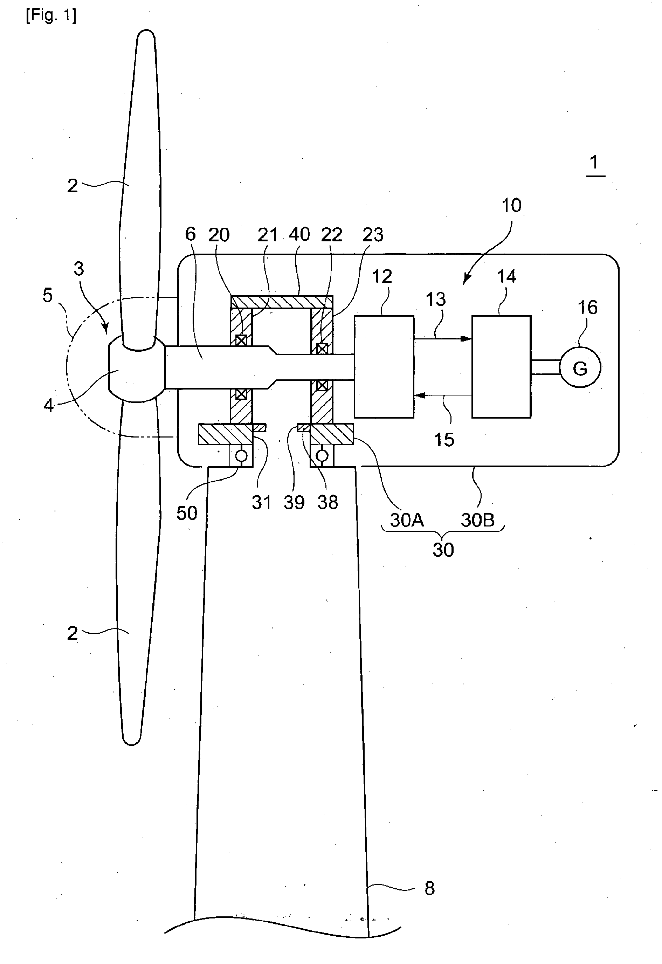

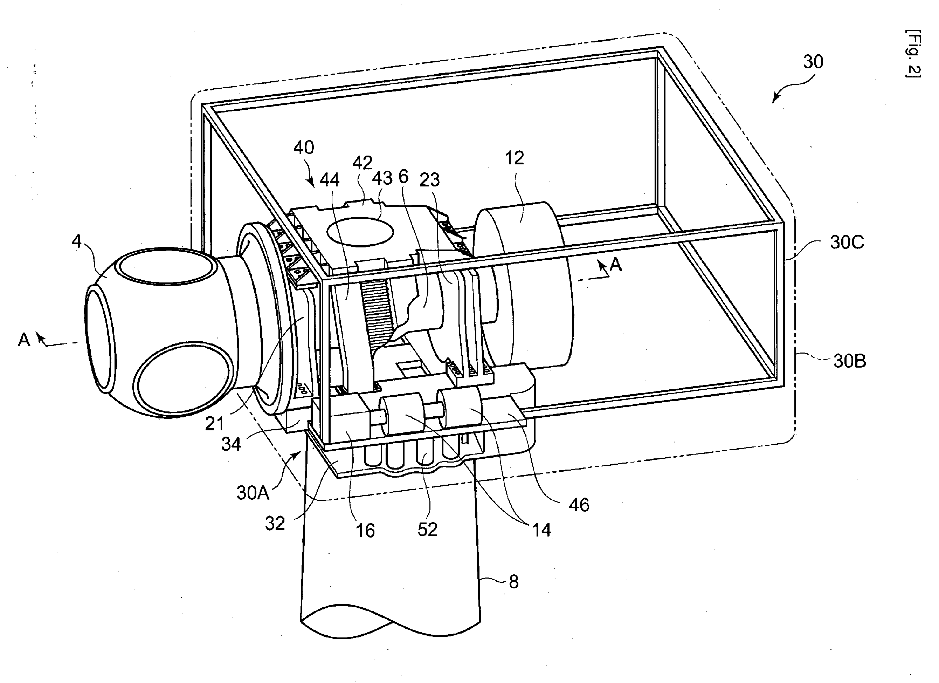

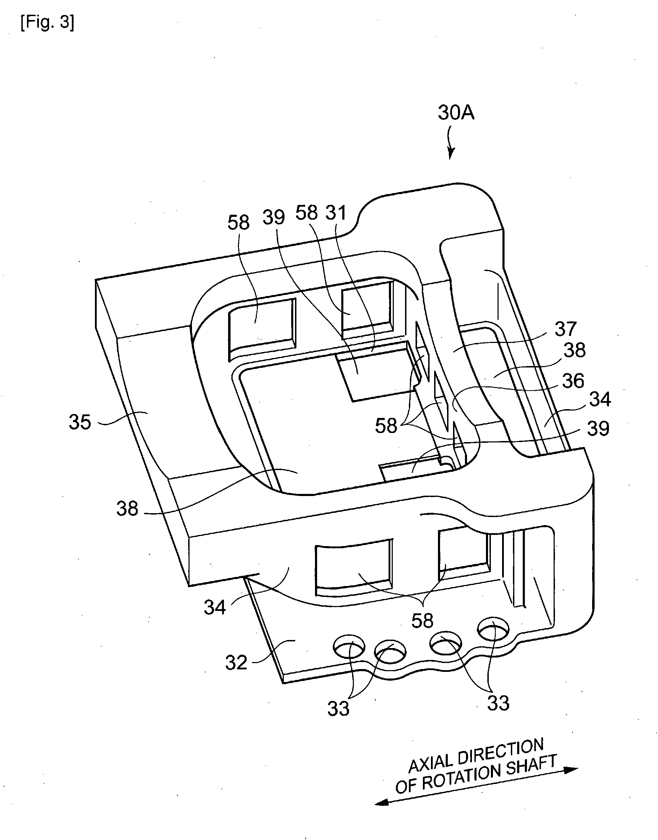

Fig. 1 is a schematic view of an overall structure of a wind turbine generator. Fig. 2 is an oblique perspective view of an exemplary structure inside a nacelle of the wind turbine generator. Fig. 3 is an oblique perspective view of an exemplary structure of a nacelle base.

As shown in Fig. 1, a wind turbine generator 1 is provided with a rotor 3 constituted by a blade 2 and a hub 4, a rotation shaft 6 coupled to the hub 4 of the rotor 3, a generator 16 for generating power and a drive train 10 for transmitting rotation energy of the rotation shaft 6 to the generator 16.
The hub 4 is covered by a hub cover 5. Further, the rotation shaft 6 may be housed in a nacelle 30 arranged on a tower 8 installed upright offshore or on the ground.

The rotation shaft 6 is supported rotatably by the nacelle 30 via a pair of bearings (a front bearing 20, a rear bearing 22) housed in bearing housings 21, 23, respectively. The bearing housings 21, 23 of the bearings 20, 22 are supported by a nacelle base 30A of the nacelle 30 and are connected to each other by a connection frame 40. Further, the nacelle base 30A and the connection frame 40 are described later in details.

As shown in Fig. 1, the drive train 10 may include a hydraulic pump 12 attached to the rotation shaft 6 and a hydraulic motor 14 connected to the hydraulic pump 12 via a high-pressure oil line 13 and a low pressure oil line 15. The hydraulic pump 12 is driven by the rotation shaft 6 to pressurized operating oil, thereby generating high pressure operating oil (pressurized oil). An outlet of the hydraulic pump 12 is connected to an inlet of the hydraulic motor 14 via the high-pressure oil line 13. Thus, the pressurized oil generated by the hydraulic pump 12 is supplied to the hydraulic motor 14 via the high-pressure oil line 13 and the hydraulic motor 14 is driven by the pressurized oil, generating low-pressure operating oil. The low pressure operating oil having performed work in the hydraulic motor 14 is then returned to the hydraulic pump 12 via the low-pressure oil line 15 arranged between an outlet of the hydraulic motor 14 and an inlet of the hydraulic pump 12. Further, an output shaft of the hydraulic motor 14 is connected to a rotary shaft of the generator 16 to input rotation of the hydraulic motor 14 to the generator 16.
The number of hydraulic pumps 12, hydraulic motors 14 and generators 16 is not particularly limited as long as at least one of each is provided.

The drive train 10 and the generator 16 may be placed in the nacelle 30.
In the exemplary embodiment shown in Fig.2, the nacelle 30 includes the nacelle base 30A for supporting the bearing housing 21, 23 housing each of the bearings 20, 22 from below, a nacelle cover 30B for covering a variety of devices placed on the nacelle base 30A and a nacelle frame 30C to which the nacelle cover 30B is fixed. The nacelle base 30A is, for instance, formed of a casting such as spherical graphite cast iron and high-duty cast iron. Fig.2, however, shows only one of the device-mounting plates 46. On each device-mounting plate 46, a pair of hydraulic motors 14 and the generator 16 are installed. The device-mounting plate 46 is supported by the nacelle base 30A and a nacelle frame 30C attached to the nacelle base 30A.
The device-mounting plate 46 may be supported on the nacelle side via at least one of an elastic member or a damping mechanism. By damping vibration of the hydraulic motor 14 while driving, the hydraulic motor 14 can be supported on the nacelle side in a stable manner.

The structure of the nacelle base 30A is described below in details. For instance, as shown in Fig.3, the nacelle base 30A may be used, which includes a horizontal plate part 32 extending horizontally, a wall part 34 installed on the horizontal plate part 32, and a rib 36 extending along a direction perpendicular to an axial direction of the rotation shaft 6. In the wall part 34 and the rib 36, a manhole 58 may be formed for workers to move through.

In the exemplary embodiment shown in Fig.3, the horizontal plate part 32 is configured to protrude outward along the side wall portion of the side wall part 34 disposed on each side of the rotation shaft 6. In the horizontal plate part 32, holes for holding the yaw motor 52 (see Fig.2) are formed. To the yaw motor 52, a pinion gear not shown is attached. To mesh with the pinion gear, a ring gear is provided in the tower 8. Therefore, by driving the yaw motor 52 to turn the pinion gear, the nacelle base 30A supported by the tower via a yaw bearing 50 (see Fig.1) turns.

In the horizontal plate part 32, a base opening 31 is formed along an inner circumference of the wall part 34. The base opening 31 is covered by a nacelle deck plate 38. The nacelle deck plate 38 is used as a working platform for workers to perform maintenance on the devices in the nacelle thereon. In the nacelle deck plate 38, a deck opening 39 is formed. Via the deck opening 39, an interior of the nacelle 30 and an interior of the tower 8 communicate. This allows for transportation of a transfer-object component through the deck opening 39 using a component transferring mechanism in the nacelle 30, such as a crane and a hoist. The deck opening 39 may be closable as needed. For instance, the deck opening 39 may be opened only when the transfer-object component is transferred via the deck opening 39.

As shown in Fig.3, a concave portion 35 is formed on the hub side in the wall part 34 of the nacelle base 30A. In the concave portion 35, a lower part of the bearing housing 21 of the front bearing is engaged. In a similar manner, another concave portion 37 is formed in the rib. In the concave portion 37, a lower part of the bearing housing 23 of the rear bearing 22 is engaged. As shown in Fig.2, the bearing housings 21, 23 engaged in the concave portions 35, 37 are fastened to the nacelle base 30A (an upper surface of the wall part 34) at both sides of the bearing housings 21, 23. Thus, the bearing housing 21 is supported from below by the wall part 34 and fastened to the nacelle base 30A while the bearing housing 23 is supported from below by the rib 36 and fastened to the nacelle base 30A. Therefore, the lower parts of the bearing housings 21, 23 are held in place by the nacelle base 30A.
Meanwhile, upper parts of the bearing housings 21, 23 are connected to each other by a connection frame 40 and are held in place by the connection frame 40.
In this manner, each of the bearing housings 21, 23 is held in place by the nacelle base 30A and the connection frame 40 and thus, it is possible to maintain concentricity between the bearings 20, 22.

The connection frame 40 may include a connection plate part 42 and a pair of support parts 44 as shown in Fig.2. The connection plate part 42 is arranged above the rotation shaft 6 to connect the upper parts of the bearing housings 21, 23 and includes an attachment part 43 for the component transferring mechanism such as a crane. The pair of support parts 44 supports the connection plate part 42 to the nacelle base 30A on both sides of the rotation shaft 6. As a result, the upper parts of the bearing housings 21, 23 are connected to each other by the connection plate part 42, thereby contributing to maintaining the concentricity between the bearings 20, 22. Further, in the case of attaching the component transferring mechanism to the attachment part 42 provided in the connection plate part 42, the support part 44 is capable of supporting the load of the component transferring mechanism.

The attachment part 43 may be configured such that a jib of a crane as the component transferring mechanism can be fixed using an arbitrary fastening member. The support part 44 may also function as stairs for workers to move up and down.

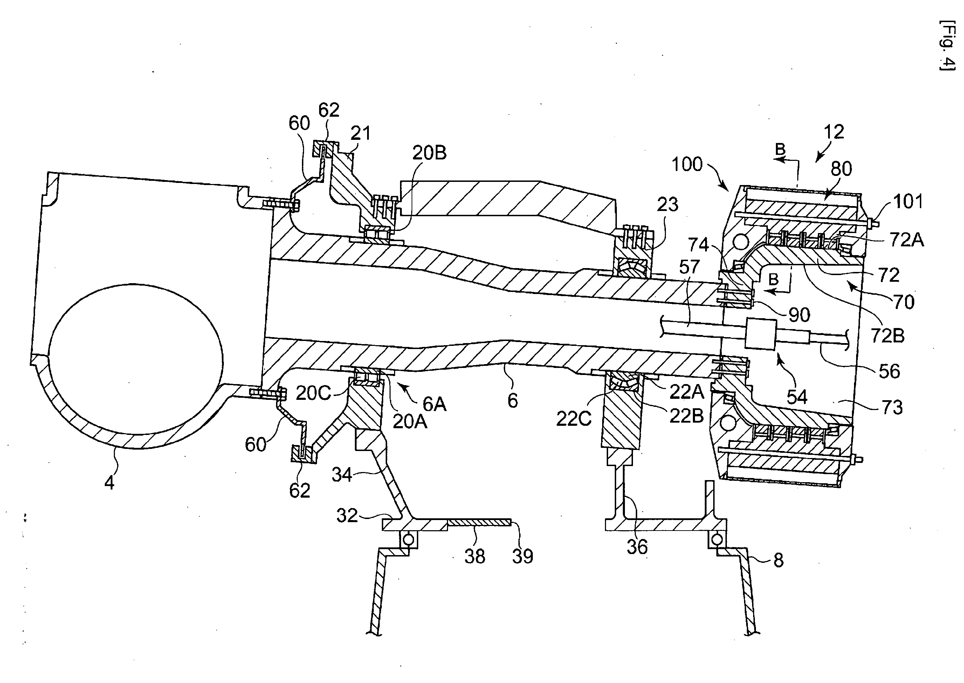

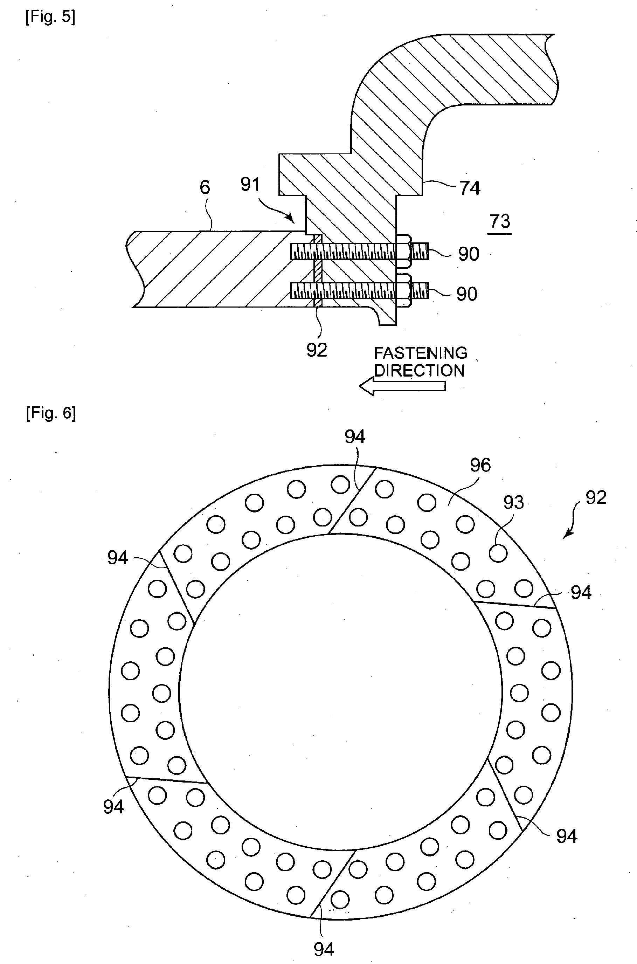

Fig. 4 is a cross-sectional view taken along a line A-A of Fig.2. Fig. 5 is an illustration around a fastening section of the rotation shaft 6 and a pump shaft 70.

The front bearing 20 is configured, as shown in Fig.4, that a rolling element 20C is held between an inner ring 20A and an outer ring 20B and the front bearing 20 is housed in the bearing housing 21. In a similar manner, the rear bearing 22 is configured that a rolling element 22C is held between an inner ring 22A and an outer ring 22B and is housed in the bearing housing 23. Fig.4 shows the case where the front bearing 20 in a form of the radial bearing without the self-aligning function is a double row cylindrical roller bearing and the rear bearing 22 in a form of the thrust bearing without the self-aligning function is a double row tapered roller bearing.
As shown in the drawing, in the bearing housing 21 of the front bearing 20, a plurality of brake calipers 62 is provided to brake on the rotation shaft by gripping a brake disk 60 fastened to the hub by fastening the brake disk with a flange of the rotation shaft 6.

In reference to Fig.4 and Fig.5, an exemplary structure of the hydraulic pump 12 is described in details. As shown in Fig.4 and Fig.5, the hydraulic pump 12 is formed with a pump shaft 70 connected to an end of the rotation shaft 6 farther from the hub 4, and a pressurized-oil production mechanism 80 for producing pressurized oil by the rotation of the pump shaft 70. The pressurized-oil production mechanism 80 may be housed in the pump housing 100.

The pump shaft 70 includes a cylindrical part 72 and an inward flange 74. The cylindrical part 72 is formed with a diameter larger than the rotation shaft 6 near a connection section of the rotation shaft 6 with the pump shaft 70. The inward flange 74 is provided on a side nearer to the rotation shaft 6 than the cylindrical part 72.

The pressurized-oil production mechanism 80 is held on the outer circumferential side of the cylindrical part 72. For instance, a ring cam 82 of the pressurized-oil production mechanism 80 may be attached to an outer circumference 72A of the cylindrical part 72 being approximately parallel to a center axis of the pump shaft 70. Meanwhile, on an inner circumferential side of the cylindrical part 72, an interior space 73 exists, surrounded by the cylindrical part 72 and an inner circumferential surface 72B. In the interior space 73, a slip ring 54 is provided for electrically connecting a stationary-side cable 56 to a rotary-side cable 57.

The inner circumferential surface 72B of the cylindrical part 72 tapers so that a thickness of the cylindrical part 72 becomes smaller with distance from the hub 4 as shown in Fig.4. As a result, it is possible to achieve both the strength and the weight reduction of the pump shaft 70 as a section (a front section) nearer to the rotation shaft 6 of the cylindrical part 72, requiring relatively high strength is formed thick, whereas a section (a rear section) farther from the rotation shaft 6 of the cylindrical part 72, requiring relatively low strength is formed thin.

The inward flange 74 is disposed on a side nearer to the rotation shaft 6 than the cylindrical part 72 and extends inward from the cylindrical part 72 in the radial direction. In other words, the inward flange 74 is a part where the diameter of the pump shaft 70 changes from the diameter of the cylindrical part 72 toward the diameter of the rotation shaft 6.

The inward flange 74 is fastened to the rotation shaft 6 by the fastening member 90 in such a state that the surface of the inward flange 74 is abutted directly or indirectly to the end surface of the rotation shaft 6. For instance, the fastening member 90 may be a combination of a stud bolt and a nut. The inward flange 74 is fastened to an end surface of the rotation shaft 6 in a fastening direction (see Fig.5) from the interior space 73 toward the rotation shaft 6. The fastening member 90 extends in the fastening direction from the interior space 73 toward the rotation shaft 6, and the fastening member 90 penetrates the inward flange 74 to be partially inserted into the rotation shaft 6.
Further, a plurality of the fastening members 90 may be provided in a fastening area where the inward flange 74 and the end surface of the rotation shaft 6 are fastened together. For instance, the fastening members 90 may be disposed in a staggered fashion in the fastening area. It is possible to arrange a larger number of the fastening members 90 by arranging them in a staggered fashion in the fastening area.

There is provided a joint section 91 (see Fig.5) between the end surface of the rotation shaft and the outer circumferential surface of the inward flange 74 for the purpose of alignment. In the joint section 91, a depression and a projection, respectively formed on the end surface of the rotation shaft 6 and the outer circumferential surface of the inward flange 74, engage with each other. The joint section 91 determines the position of the pump shaft 12 with respect to the rotation shaft 6 in the radial direction. Thus, this makes it easy to attach the hydraulic pump 12 to the rotation shaft 6.

Between the rear bearing 22 housed in the bearing housing 23, and the pump shaft 70, the outer diameter of the rotation shaft 6 is approximately the same. More specifically, in the rotation shaft 6 between the rear bearing 22 and the pump shaft 70, there is no flange for being fastened to the pump shaft 70. As a result, it is possible to assemble the bearings in a simple fashion, by inserting the rear bearing 22 from the end of the rotation shaft 6 while avoiding the size increase of the rear bearing 22.
The inward flange 74 is fastened to the end surface of the rotation shaft 6 in the fastening direction from the interior space 73 toward the rotation shaft 6 by using the interior space on the inner circumferential side of the cylindrical member 72 and thus, the pump shaft 70 is fastenable to the rotation shaft 6 having no flange at the end

From a perspective of transmitting large torque from the rotation shaft 6 to the pump shaft 70, a friction shim 92 (see Fig.5) is provided between the end surface of the rotation shaft 6 and the outer circumferential surface of the inward flange 74.
Fig. 6 is an illustration of an exemplary configuration of the friction shim 92. The friction shim 92 may include a plurality of holes 93 disposed in a staggered fashion corresponding to the fastening members 91 disposed in a staggered fashion in the fastening area of the inward flange 74 and the end surface of the rotation shaft 6. The fastening members 91 penetrate through the holes 93, respectively. The friction shim 92 is dividable into a plurality of segments 96 along boundary lines 94 between segments 96 (dividing lines 94 for dividing the friction shim 92 into the segments 96). The boundary line 94 may incline with respect to the radial direction to avoid each of the holes 93.
In this manner, with use of the friction shim 92 in a form of the annular member dividable into a plurality of segments 96 along the dividing line 94, the production of the friction shim 92 is facilitated. Further, by inclining the dividing lines 94 for dividing the friction shim 92 into a plurality of the segments 96 with respect to the radial direction to avoid the holes 93 arranged in the staggered fashion, it is possible to provide a larger number of the fastening members in each of the segments 96. Therefore, the friction force provided by the friction shim 92 can be further improved.

The friction shim 92 may, for instance, have an outer diameter up to 1 meter and an inner diameter of at least 0.5 meter. From the perspective of further enhancing the friction force by the friction shim 92, the friction shim 92 may have diamond particles held on both surfaces of the friction shim 92.

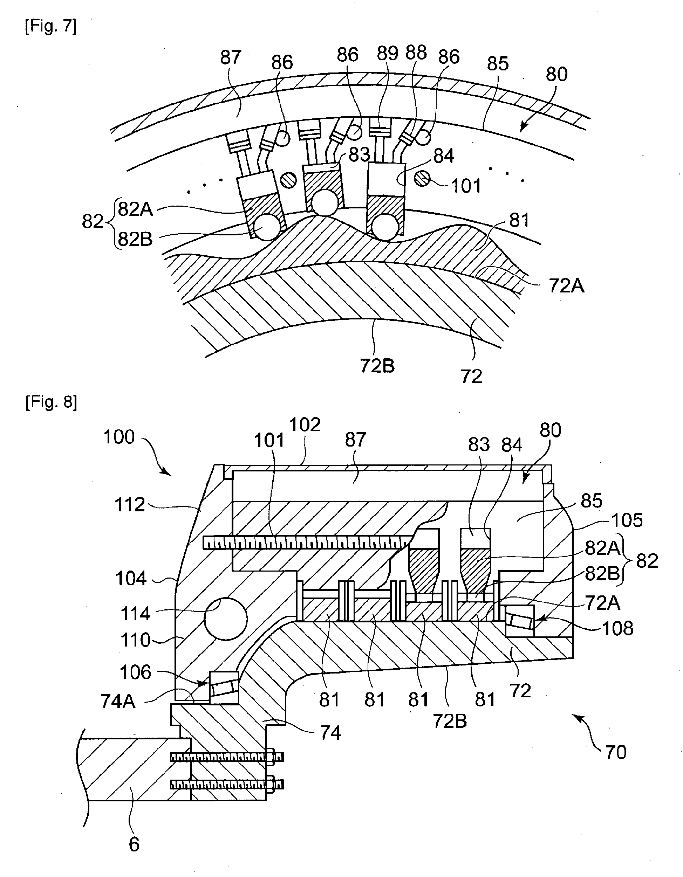

Fig.7 and Fig.8 are illustrations of exemplary structures of the pressurized-oil production mechanism 80. As shown in the drawings, the pressurized-oil production mechanism 80 may include a ring cam 81, a plurality of pistons 82 and a cylinder block 85. The pistons 82 are arranged radially around the ring cam 81. In the cylinder block 85, a cylinder 84 is provided for forming a working chamber 83 with each of the pistons 82.
The ring cam 81 is an annular member having a plurality of lobes on an outer circumferential surface. The ring cam 81 is fixed to the outer circumferential surface 72A of the cylindrical part 72 of the pump shaft 70. To form a plurality of the working chamber 83, plural rows of the ring cams 81 (four rows in the exemplary embodiment shown in Fig.8) may be provided in the axial direction of the pump shaft 70, The piston 82 is formed by a piston body 82A disposed on the working chamber side and a roller 82B provided on the ring cam side. The roller 82B is held rotatably by the piston body 82A so as to transmit the pressing force from the ring cam 81 to the piston body 82A. The piston body 82A receives the pressing force form the ring cam 81 via the roller 82B. The piston body 82A reciprocates while being guided by the cylinder 84, thereby changing volume of the working chamber 83 cyclically. In response to the reciprocating motion of the piston body 82A, an intake stroke for drawing the operating oil from the low pressure oil line 15 (see Fig.1) into the working chamber 83 and a compression stroke for compressing the operating oil within the working chamber 83 and feeding the pressurized oil to the high pressure oil line 13 (see Fig.1). Each of the working chambers is connected to the high pressure oil line 13 via a high pressure communication path 86 (see Fig.7) provided inside the cylinder block 85, and to the low pressure oil line 15 via an annular low pressure communication path 87 provided on the outer circumference of the cylinder block 85.
Between each of the working chambers 83 and the high pressure communication path 86 corresponding to the working chamber 83, a low pressure valve 89 is provided. By opening and closing the high pressure valve 88 and the low pressure valve 89, a communication status between each of the working chambers 83 and the high pressure oil line 13 or the low pressure oil line 15 is switchable.

The displacement of the hydraulic pump 12 is adjustable by controlling opening and closing of the high pressure valve 88 and the low pressure valve 89. For instance, by opening and closing the high pressure valve 88 and the low pressure valve 89 in accordance with a phase of the ring cam 81, a ratio of the number of working chambers 83 (active chambers which are pressurized) repeating the intake stroke and the compression stroke to the number of working chambers 83 (non-active chambers which are not pressurized) keeping the high pressure valve 88 closed and the low pressure valve 89 open regardless of the phase of the ring cam 81, is changeable. By changing the ratio of the active working chambers to the non-active working chambers, the displacement of the hydraulic pump 12 may be changed.
The displacement of the hydraulic pump 12, herein, refers a volume of the pressurized oil sent to the high pressure oil line 13 while the pump shaft 70 rotates one time.

In the pressurized-oil production mechanism 80 having the above structure, the displacement of the pressurized-oil production mechanism 80 is adjusted by opening and closing control of the high pressure valve 88 and the low pressure valve 89, and hence, it can be considered effective to increase the number of working chambers 83 for the purpose of achieving fine regulation of the displacement of the hydraulic pump.
Here, one possible design for providing more working chambers 83 is to increase the number of working chambers 83 arranged in a circumferential direction by reducing the diameter of each cylinder 84. However, this design might cause the ratio of the axial length of the cylinder 84 to the diameter of the cylinder 84 to deviate from a suitable range, and may not be adopted in some cases.
Accordingly, in some embodiments, the working chambers 83 formed by the pistons 82 and the cylinders 84, both of which are arranged around the cylindrical part 72 of the pump shaft 70. The cylindrical part 72 has a relatively large diameter and thus can hold a large number of working chambers without deviating from a suitable range of the ratio between the axial length and the diameter of the cylinder 84. More working chambers allow the pressurized-oil production mechanism 80 to finely regulate the displacement of the hydraulic pump. The end surface of the rotation shaft 6 is fastened to the inward flange 74 extending inward from the cylindrical part 72 in the radial direction and thus, the rotation shaft 6 can be configured with a smaller diameter than the pump shaft 72. As a result, it is possible to reduce the size of the rotation shaft 6 and the bearings 20, 22 for supporting the rotation shaft 6, thereby reducing the weight thereof.
In this manner, it is possible to finely control the displacement of the hydraulic pump 12 and also to reduce the weight of the rotation shaft 6 and the bearings 20, 22.

The pressurized-oil production mechanism 80 may be housed in the pump housing 100. The pump housing 100 is configured, as shown in Fig.8, to include a cylindrical shell 102 covering the outer periphery of the cylinder block 85, and a pair of end plates 104, 105 provided at both ends of the cylindrical shell 102, respectively.
The first end plate 104 disposed nearer to the hub 4 is supported via a first pump housing 106 by a cylindrical surface 74A formed in the inward flange 74. And the second end plate 105 disposed farther from the hub 4 is supported via a second pump bearing 108 by the outer circumference 72A of the cylindrical part 72. The first pump bearing 106 and the second pump bearing 108 may be thrust bearings.
The first end plate 104 and the second end plate 105 are fastened to each other by a tie-bolt 101 penetrating through the cylinder block 85.

The first end plate 104 includes an inner circumferential part 110 which is on an inner circumferential side and to which an outer ring of the first pump bearing 106 is fixed and an outer circumferential part 112 which extends outward in a radial direction from the inner circumferential part 110 toward the cylindrical shell 102. In the first end plate 104, the inner circumferential part 110 is formed thicker than the outer circumferential part 112. In the inner circumferential part 110 of the first end plate, an inner passage 114 is formed. In the inner passage 114, the pressurized oil produced in the working chamber 83 flows toward the high pressure oil line 13. The inner passage 114 communicates with the working chamber 83 via the high pressure communication path 86.
In this manner, by arranging the inner passage 114 in the inner circumferential part 110 which is shorter in circumferential length than the outer circumferential part 112, it is possible to suppress weight increase of the first end plate 104 and to improve durability of the first end plate 104 with respect to the pressurized oil. More specifically, the inner circumferential part 110 of the first end plate 104 is formed thicker around the inner passage 114 so as to withstand the high pressure of the pressurized oil but the circumferential length of the inner circumferential part 110 remains relatively short. Thus, the overall weight of the first end plate 104 does not increase significantly. Therefore, it is possible to suppress the weight of the first end plate 104 and also to improve the durability of the first end plate 104 with respect to the pressurized oil.

From the perspective of preventing the pump housing 100 from rotating with the rotation shaft 6, the first end plate 104 may be fixed to the nacelle side.

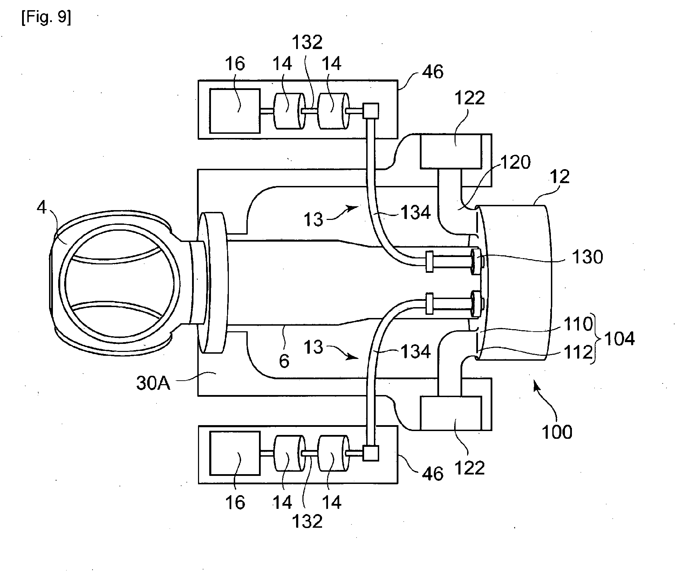

Fig. 9 is an illustration of a state in which the first end plate 104 is fixed to the nacelle side. As shown in the drawing, an arm part 120 is connected to the first end plate 104 in a large area over the inner circumferential part 110 and the outer circumferential part 112. A pair of the arm parts 120 is provided on both sides of the rotation shaft 6. Via each of the arm parts 104, the first end plate 104 is fixed to the nacelle side. In the exemplary embodiment shown in Fig.9, the arm part 120 is connected to the large area over the inner circumferential part 110 to the outer circumferential part 112 of the first end plate 103 in the radial direction. However, the arm part 120 may be connected only to the inner circumferential part 110 of the first end plate 104.
In this manner, by connecting the arm part 120 to at least the inner circumferential part 110 of the first end plate 104 formed thicker than the outer circumferential part 112, the pump housing 100 can be firmly supported via the arm part 120 to the nacelle side 30.

Between the arm part 120 and the nacelle 30, a pump support is provided. The pump housing 100 may be supported by the pump support 122 via the arm part 120 to the nacelle side.
In the exemplary embodiment shown in Fig.9, the pump support 122 is arranged between the nacelle base 30A and the arm part 120. The pump support 122 is configured to immobilize the pump housing 100 in the rotation direction while allowing a displacement of the pump housing 100 in the direction perpendicular to the axis of the pump shaft 70. In some embodiments, the pump support 122 allows for the movement of the pump housing 100 relative to the nacelle base 30A in every degree of freedom apart from rotation. As a result, it is possible to reduce concentrated load on the bearings 20, 22 and the pump bearings 106, 108 due to the deflection of the rotation shaft 6.

As shown in Fig.9, the high pressure oil line (a pressurized-oil piping) from the outlet of the hydraulic pump 12 to the inlet 132 of the hydraulic motor 14 may be at least partially formed by a flexible piping 134.
In this manner, by forming the high pressure oil line 13 at least partially by the flexible piping 134, the relative displacement between the hydraulic pump 12 and the hydraulic motor 14 can be absorbed by the flexible piping 134 and the load on the high pressure oil line 13 can be reduced. Further, the pressurized oil flowing in the high pressure oil line 13 is at high temperature and heat expansion of the high pressure oil line 13 generates heat stress. However, by forming the high pressure oil line 13 at least partially by the flexible piping 134, the heat expansion of the high pressure oil line 13 can be absorbed and generation of the heat stress can be suppressed by the flexible piping 134.

Next, a process of attaching the hydraulic pump 12 to the rotation shaft 6 in the wind turbine generator having the above structure is described.
First, the front bearing 20 and the rear bearing 22 are assembled to the rotation shaft 6 in this order. More specifically, the front bearing 20 is fitted from the end of the rotation shaft 6 on the side farther from the hub 4 and the front bearing 20 and the bearing housing 21 are attached to the rotation shaft 6. Next, the rear bearing 22 is fitted from the end of the rotation shaft 6 on the side farther from the hub 4 and then the rear bearing 22 and the bearing housing 23 are attached to the rotations haft 6.
Then, the pump shaft 70 is placed to the rotation shaft 6 so that the inward flange 74 opposes the end surface of the end of the rotation shaft 6 that is farther from the hub 4. Meanwhile, in the joint section 91, the depression and the projection, respectively formed on the end surface of the rotation shaft 6 and the outer circumferential surface of the inward flange 74, engage with each other. As a result, the position of the pump shaft 70 with respect to the rotation shaft 6 in the radial direction is determined. Then, with use of the fastening member, the inward flange 74 of the pump shaft 70 is fastened to the end surface of the rotation shaft 6. Finally, the pressurized-oil production mechanism 80 and the pump housing 100 are assembled to the pump shaft 70. Alternatively, the pressurized-oil production mechanism 80 and the pump housing 100 may be assembled to the pump shaft 70 in advance prior to connecting the pump shaft 70 to the rotation shaft 6.

As described above, in some embodiments, the pump shaft 70 includes the cylindrical part 72 and the inward flange 74, and the cylindrical part 72 for supporting the pressurized-oil production mechanism 80 on the outer circumferential side and the inward flange 74 is disposed on the side nearer to the rotation shaft 6 than the cylindrical part 72. The pump shaft 70 is connected to the rotation shaft 6 by the fastening member 90 extending in the fastening direction from the interior space 73 on the inner circumferential side of the cylindrical part 72 toward the rotation shaft 6. The fastening member 90 penetrates the inward flange 74 to be partially inserted into the end of the rotation shaft 6. Thus, the fastening member 90 for fastening the pump shaft 70 to the rotation shaft 6 can have a length that is sufficient to penetrate through the inward flange 74 of the pump shaft 70 and reach a fastening depth in the end of the rotation shaft 6. This makes it easy to achieve proper tensile force of the fastening member 90 when attaching the pump shaft 70 to the rotation shaft 6.

While the present invention has been described with reference to the exemplary embodiments, it is obvious to those skilled in the art that various changes may be made without departing from the scope of the invention.

For instance, in the above embodiments, the upper part of the bearing housing 21 of the front bearing 20 is connected to the upper part of the bearing housing 23 of the rear bearing 22 by the connection frame 40. However, this is not limitative and the bearing housings 21, 23 may be connected to each other by a tubular connection frame.

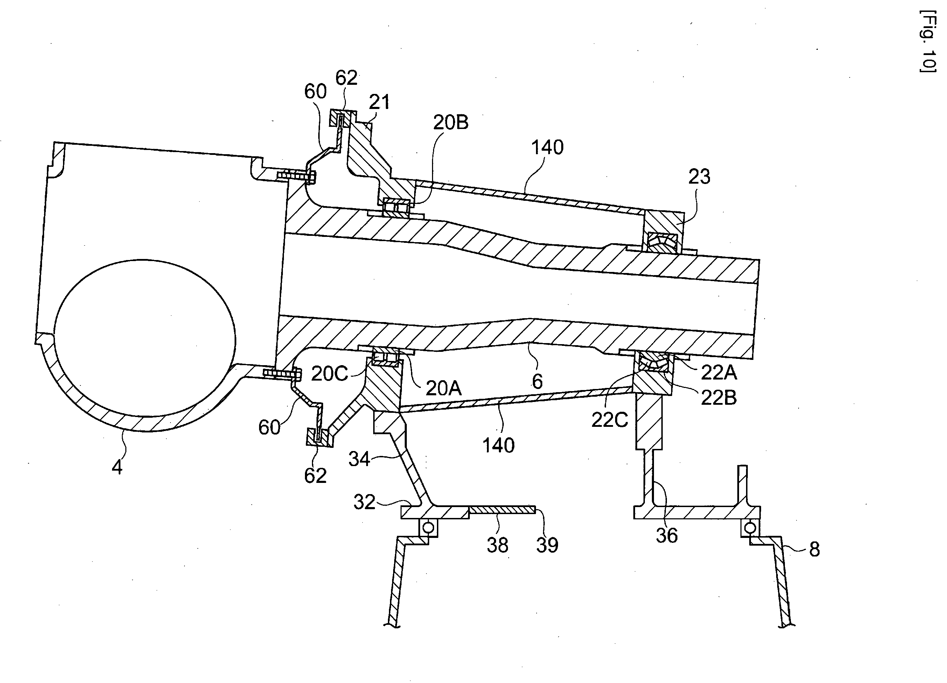

Fig. 10 is an illustration of a state in which the bearing housings 21, 23 are connected by a tubular connection frame. As shown in the drawing, the tubular connection frame 140 is provided between the bearing housings 21, 23 to surround the rotation shaft 6. Each of the bearing housings 21, 23 is fixed to an end of the connection frame 140. As a result, the bearing housings 21, 23 of the bearings 20, 22 are each held in place by the tubular connection frame 140 and the concentricity between the bearings 20, 22 can be maintained. Thus, even if a complex load (including bending load) caused by input fluctuation from the blade 2 to the rotation shaft 6, it is possible to prevent the situation that the center of each of the bearings 20, 22 is displaced and the load component of an unexpected direction acts on the bearings 20, 22 and hence, to attain an expected life of the bearing 20, 22.
Further, in such a case that the bearing housings 21, 23 have enough rigidity to maintain the concentricity of each of the bearings 20, 22, it is possible to hold each of the bearing housings 21, 24 solely by the nacelle base 30A and without the connection frame 40, 44.

### Reference Signs List

- 1: Wind turbine generator
- 2: Blade
- 3: Rotor
- 4: Hub
- 5: Hub cover
- 6: Rotation shaft
- 8: Tower
- 10: Drive train
- 12: Hydraulic pump
- 13: High pressure oil line
- 14: Hydraulic motor
- 15: Low pressure oil line
- 16: Generator
- 20: Front bearing
- 20A: Inner ring
- 20B: Outer ring
- 20C: Rolling element
- 21: Bearing housing
- 22: Rear bearing
- 22A: Inner ring
- 22B: Outer ring Inner ring
- 22C: Rolling element
- 23: Bearing housing
- 30: Nacelle
- 30A: Nacelle base
- 30B: Nacelle cover
- 30C: Nacelle frame
- 31: Base opening
- 32: Horizontal plate part
- 33: Holding hole
- 34: Side wall part
- 35: Concave portion
- 36: Rib
- 37: Concave portion
- 38: Nacelle deck plate
- 39: Deck opening
- 40: Connection frame
- 42: Connection plate part
- 44: Support part
- 46: Device-mounting plates
- 50: Yaw bearing
- 52: Yaw motor
- 54: Slip ring
- 56: Stationary cable
- 57: Rotary cable
- 58: Manhole
- 60: Brake disk
- 62: Brake caliper
- 70: Pump shaft
- 72: Cylindrical part
- 73: Interior space
- 74: Inward flange
- 80: Pressurized-oil production mechanism
- 81: Ring cam
- 82: Piston
- 82A: Piston body
- 82B: Roller
- 83: Working chamber
- 84: Cylinder
- 85: Cylinder block
- 86: High pressure communication path
- 87: Low pressure communication path
- 88: High pressure valve
- 89: Low pressure valve
- 90: Fastening member
- 91: Joint section
- 92: Friction shim
- 93: Hole
- 94: Dividing line
- 96: Segment
- 100: Pump housing
- 102: Cylindrical shell
- 104: First end plate
- 105: Second end plate
- 106: First pump bearing
- 108: Second pump bearing
- 110: Inner circumferential part
- 112: Outer circumferential part
- 114: Inner passage
- 120: Arm part
- 122: Pump support
- 130: Outlet
- 132: Inlet
- 134: Flexible piping

## Claims

1. A power generating apparatus of a renewable energy type which generates power from renewable energy, the apparatus comprising:
at least one blade (2);
a hub (4) which is rotated with the at least one blade (2) by the renewable energy received via the at least one blade;
a rotation shaft (6) which is coupled to the hub (4);
a hydraulic pump (12) which comprises a pump shaft (70) coupled to an end of the rotation shaft (6) that is on a side farther from the hub, and a pressurized-oil production mechanism (80) attached to the pump shaft (70) and producing pressurized oil by rotation of the pump shaft,
at least one hydraulic motor (14) which is driven by the pressurized oil from the hydraulic pump (12); and
at least one generator (16) which is driven by the at least one hydraulic motor, (14)
wherein the pump shaft (70) includes a cylindrical part (72) and an inward flange (74), the cylindrical part (72) supporting the pressurized-oil production mechanism (80) on an outer circumferential side and having an interior space (73) on an inner circumferential side, the inward flange (74) being disposed on a side nearer to the rotation shaft (6) than the cylindrical part (72), and
wherein the rotation shaft (6) and the pump shaft (70) are coupled to each other by at least one fastening member (90) extending in a fastening direction from the interior space (73) toward the rotation shaft (6), the at least one fastening member (90) penetrating the inward flange (74) to be partially inserted into the end of the rotation shaft (6).

2. The power generating apparatus of the renewable energy type according to claim 1, further comprising:
at least one bearing (20,22) which supports the rotation shaft (6) rotatably,
wherein the rotation shaft has an approximately constant diameter between the pump shaft (70) and one of the at least one bearing (22) nearest to the pump shaft.

3. The power generating apparatus of the renewable energy type according to claim 1 or 2, further comprising:
a friction shim (92) which is arranged between the end surface of the rotation shaft (6) and the inward flange (74) and which has at least one hole (93) that the at least one fastening member (90) penetrates.

4. The power generating apparatus of the renewable energy type according to claim 3,
wherein the at least one fastening member (90) includes a plurality of fastening members disposed in a staggered fashion in a fastening area where the inward flange (74) and the end surface of the rotation shaft (6) are fastened together, and
wherein the at least one hole (93) includes a plurality of holes that are disposed in a staggered fashion corresponding to the fastening members (90), and the friction shim (92) is an annular member formed of a plurality of segments (96) into which the friction shim (92) is divided at dividing lines (94) each of which inclines with respect to a radial direction to avoid the holes (93).

5. The power generating apparatus of the renewable energy type according to claim 3 or 4,
wherein the friction shim (92) has an outer diameter not less than 1 meter and an inner diameter not less than 0.5 meter.

6. The power generating apparatus of the renewable energy type according to any one of claims 3 to 5,
wherein the friction shim (92) has diamond particles held on both surfaces.

7. The power generating apparatus of the renewable energy type according to any one of claims 1 to 6,
wherein the pressurized-oil production mechanism (80) includes: a ring cam (81) attached to an outer circumference of the cylindrical part (72); a plurality of pistons (82) arranged radially around the ring cam (81) and caused to reciprocate by the ring cam; and a cylinder block (85) including cylinders (84) that form working chambers (83) for producing the pressurized oil with each of the pistons (82),
wherein the pressurized-oil production mechanism (80) is housed in a pump housing (100) which includes a cylindrical shell (102) covering an outer periphery of the cylinder block (85) and a pair of end plates (104,105) provided on respective ends of the cylindrical shell, and
wherein the pair of end plates includes a first end plate (104) that is nearer to the hub (4) and a second end plate (105) that is farther from the hub (4), the first end plate (104) being supported via a first pump bearing (106) by a bearing-holding cylindrical surface formed in the inward flange (74), the second end plate (105) being supported via a second pump bearing (108) by the outer circumference of the cylindrical part (72).

8. The power generating apparatus of the renewable energy type according to claim 7,
wherein the first end plate (104) includes an inner circumferential part (110) which is on an inner circumferential side and to which an outer ring of the first pump bearing (106) is fixed and an outer circumferential part (112) which extends outward in a radial direction from the inner circumferential part toward the cylindrical shell (102), and
wherein the inner circumferential part (110) includes an inner passage (114) in which the pressurized oil produced in the working chamber (83) flows and the inner circumferential part (110) is formed thicker than the outer circumferential part (112).

9. The power generating apparatus of the renewable energy type according to claim 8, the apparatus further comprising:
a nacelle (30) for housing at least the rotation shaft (6) and the hydraulic pump (12),
wherein the pump housing (100) is supported on a nacelle side via an arm part (120) connected to at least the inner circumferential part (110) of the first end plate (104).

10. The power generating apparatus of the renewable energy type according to claim 9, the apparatus further comprising:
a pump support (122) which supports the pump housing (100) to the nacelle side via the arm part (120) so as to prevent the pump housing (100) from rotating with the pump shaft (70) while allowing for displacement of the pump housing (100) in a direction perpendicular to an axis of the pump shaft (70).

11. The power generating apparatus of the renewable energy type according to claim 10, the apparatus further comprising:
a pressurized-oil piping which connects an outlet (130) of the hydraulic pump (12) to an inlet (132) of the hydraulic motor (14) and in which the pressurized oil supplied from the hydraulic pump to the hydraulic motor flows,
wherein the pressurized piping is at least partially formed by a flexible piping (134).

12. The power generating apparatus of the renewable energy type according to any one of claims 7 to 11,
wherein the first pump bearing (106) and the second pump bearing (108) are thrust bearings.

13. The power generating apparatus of the renewable energy type according to any one of claims 1 to 12, the apparatus further comprising:
a nacelle (30) which houses at least the rotation shaft (6), the hydraulic pump (12) and the hydraulic motor (14); and
a placement table which is supported by the nacelle (30) via at least one of an elastic member and a damping mechanism and on which the hydraulic motor (14) is placed.

14. The power generating apparatus of the renewable energy type according to any one of claims 1 to 13,
wherein an inner circumferential surface of the cylindrical part (72) tapers so that a thickness of the cylindrical part becomes smaller with distance from the hub (4).

15. The power generating apparatus of the renewable energy type according to any one of claims 1 to 14, further comprising:
a slip ring (54) which is provided in the interior space (73) of the cylindrical part (72) and which electrically connects a stationary-side cable (56) to a rotary-side (57) cable that rotates with the rotation shaft (6).

16. The power generating apparatus of the renewable energy type according to claim 2,
wherein the at least one bearing comprises a front bearing (20) disposed nearer to the hub (4) and a rear bearing (22) disposed nearer to the pump shaft (70), and
wherein a bearing housing (21) of the front bearing and a bearing housing (23) of the rear bearing are connected to each other by a tubular connection frame (40).

17. The power generating apparatus of the renewable energy type according to any one of claims 1 to 16,
wherein the power generating apparatus of the renewable energy type is a wind turbine generator which generates power from wind in a form of the renewable energy.

18. A method of attaching a hydraulic pump (12) of a power generating apparatus of a renewable energy type in which a hub (4) and a rotation shaft (6) coupled to the hub (4) are rotated with at least one blade (2) by renewable energy received via the at least one blade (2) and rotation of the rotation shaft (6) is inputted to a generator (16) via a hydraulic transmission including a hydraulic pump (12) and a hydraulic motor (14) to generate power, the hydraulic pump (12) comprising a pressurized-oil production mechanism (80) which produces pressurized oil and a pump shaft (70) which holds the pressurized-oil production mechanism (80) and which includes a cylindrical part (72) and an inward flange (74), the cylindrical part (72) supporting the pressurized-oil production mechanism (80) and having an interior space (73) on an inner circumferential side, the inward flange (74) being disposed on an end of the cylindrical part (72), the method comprising the steps of:
placing the pump shaft (70) so that the inward flange (74) opposes an end surface of an end of the rotation shaft (6) that is farther from the hub (4); and
connecting the pump shaft (70) to the rotation shaft (6) by partially inserting at least one fastening member (90) into the end of the rotation shaft to penetrate the inward flange (74) and extend in a fastening direction from the interior space (73) toward the rotation shaft (6).

## Patentansprüche

1. Stromerzeugungsvorrichtung von einem Typ für erneuerbare Energie, die Strom aus erneuerbarer Energie erzeugt, wobei die Vorrichtung Folgendes aufweist:
wenigstens ein Blatt (2);
eine Nabe (4), die von dem wenigstens einen Blatt (2) durch die über das eine Blatt empfangene erneuerbare Energie gedreht wird;
eine Rotationswelle (6), die an die Nabe (4) gekoppelt ist;
eine Hydraulikpumpe (12), aufweisend eine an ein Ende der Rotationswelle (6) auf einer entfernteren Seite der Nabe gekoppelte Pumpenwelle (70), und ein an der Pumpenwelle (70) angeschlossener Drucköl erzeugender Mechanismus (80), der Drucköl durch die Drehung der Pumpenwelle erzeugt,
wenigstens einen Hydraulikmotor (14), der durch das Drucköl von der Hydraulikpumpe (12) angetrieben wird; und
wenigstens einen Generator (16) der von dem wenigstens einen Hydraulikmotor (14) angetrieben wird,
wobei die Pumpenwelle (70) ein zylindrisches Teil (72) und einen nach innen gerichteten Flansch (74) aufweist, wobei das zylindrische Teil (72) auf einer äußeren Umkreisseite den Drucköl erzeugenden Mechanismus (80) abstützt und auf einer inneren Umkreisseite einen Innenraum (73) aufweist, wobei der nach innen gerichtete Flansch (74) auf einer Seite angeordnet ist, die sich näher an der Rotationswelle (6) befindet als das zylindrische Teil (72), und
wobei die Rotationswelle (6) und die Pumpenwelle (70) durch wenigstens ein, sich in einer Befestigungsrichtung vom Innenraum (73) zur Rotationswelle (6) erstreckendes Befestigungselement (90) miteinander verbunden sind, wobei das wenigstens eine Befestigungselement (90) in den inneren Flansch (74) eindringt, um teilweise in das Ende der Rotationswelle (6) eingeführt zu sein.

2. Stromerzeugungsvorrichtung von einem Typ für erneuerbare Energie nach Anspruch 1, ferner aufweisend:
wenigstens ein Lager (20, 22) zum drehenden Abstützen der Rotationswelle (6),
wobei die Rotationswelle zwischen der Pumpenwelle (70) und einem der des wenigstens einen, am nächstens an der Pumpenwelle liegenden Lagers (22) einen annähernd konstanten Durchmesser aufweist.

3. Stromerzeugungsvorrichtung von einem Typ für erneuerbare Energie nach Anspruch 1 oder 2, ferner aufweisend:
eine Reibbeilagscheibe (92), die zwischen der Endfläche der Rotationswelle (6) und dem nach innen gerichteten Flansch (74) angeordnet ist, und die wenigstens ein Loch (93) aufweist, durch das das wenigstens eine Befestigungselement (90) dringt.

4. Stromerzeugungsvorrichtung von einem Typ für erneuerbare Energie nach Anspruch 3,
wobei das wenigstens eine Befestigungselement (90) mehrere, in einer gestaffelten Weise in einem Befestigungsbereich angeordnete Befestigungselemente aufweist, wobei der nach innen gerichtete Flansch (74) und die Endfläche der Rotationswelle (6) aneinander befestigt sind, und
wobei das wenigstens eine Loch (93) mehrere, in einer gestaffelten Weise entsprechend den Befestigungselementen (90) angeordnete Löcher aufweist, und die Reibbeilagscheibe (92) ein ringförmiges Element ist, das aus mehreren Segmenten (96) gebildet ist, in die die Reibbeilagscheibe (92) an Trennungslinien (94) geteilt ist, die in Bezug auf eine Radialrichtung geneigt sind, um die Löcher (93) zu vermeiden.

5. Stromerzeugungsvorrichtung von einem Typ für erneuerbare Energie nach Anspruch 3 oder 4,
wobei die Reibbeilagscheibe (92) einen Außendurchmesser von nicht weniger als 1 Meter und einen Innendurchmesser von nicht weniger als 0,5 Meter aufweist.

6. Stromerzeugungsvorrichtung von einem Typ für erneuerbare Energie nach einem der Ansprüche 3 bis 5,
wobei die Reibbeilagscheibe (92) Diamantpartikel auf beiden Flächen aufweist.

7. Stromerzeugungsvorrichtung von einem Typ für erneuerbare Energie nach einem der Ansprüche 1 bis 6,
wobei der Drucköl erzeugende Mechanismus (80) Folgendes aufweist: einen, an einem äußeren Umkreis des zylindrischen Teils (72) befestigten Ringnocken (81); mehrere, radial um den Ringnocken (81) herum angeordnete und durch den Ringnocken zu einer Hin- und Herbewegung gebrachte Kolben (82); und einen Zylinderblock (85), der Kolben (84) aufweist, die Arbeitskammern (83) zum Erzeugen des Drucköls durch jeden der Kolben (82) aufweist,
wobei der Drucköl erzeugende Mechanismus (80) in einem Pumpengehäuse (100) angeordnet ist, das eine zylindrische Schale (102) aufweist, die einen äußeren Umkreis des Zylinderblocks (85) und ein Paar von auf den jeweiligen Enden der zylindrischen Schale angeordneten Endplatten (104, 105) bedeckt, und
wobei das Paar von Endplatten eine erste, näher an der Nabe (4) gelegene Endplatte (104) und eine zweite, weiter entfernt von der Nabe (4) gelegene Endplatte (105) aufweist, wobei die erste Endplatte (104) über ein erstes Pumpenlager (106) durch eine Lager haltende, im nach innen gerichteten Flansch (74) gebildete zylindrische Fläche abgestützt ist, die zweite Endplatte (105) über ein zweites Pumpenlager (108) durch den äußeren Umkreis des zylindrischen Teils (72) abgestützt ist.

8. Stromerzeugungsvorrichtung von einem Typ für erneuerbare Energie nach Anspruch 7,
wobei die erste Endplatte (104) ein inneres umfängliches Teil (110) aufweist, das sich auf einer inneren umfänglichen Seite befindet und an dem ein äußerer Ring des ersten Pumpenlagers (106) befestigt ist, und ein äußeres umfängliches Teil (112) aufweist, das sich nach außen in einer radialen Richtung vom inneren umfänglichen Teil zur zylindrischen Schale (102) hin erstreckt, und
wobei das innere umfängliche Teil (110) einen inneren Durchgang (114) aufweist, in dem das in der Arbeitskammer (83) erzeugte Drucköl fließt, und das innere umfängliche Teil (110) mit einer größeren Dicke geformt ist als das äußere umfängliche Teil (112).

9. Stromerzeugungsvorrichtung von einem Typ für erneuerbare Energie nach Anspruch 8, ferner aufweisend:
ein Maschinenhaus (30) zur Unterbringung von wenigstens der Rotationswelle (6) und der Hydraulikpumpe (12),
wobei das Pumpengehäuse (100) über ein mit wenigstens dem inneren umfänglichen Teil (110) der ersten Endplatte (104) verbundenes Armteil (120) auf einer Seite des Maschinengehäuses abgestützt ist.

10. Stromerzeugungsvorrichtung von einem Typ für erneuerbare Energie nach Anspruch 9, ferner aufweisend:
einen Pumpenträger (122), der das Pumpengehäuse (100) an der Maschinenhausseite über das Armteil (120) abstützt und dadurch ein Verdrehen des Pumpengehäuses (100) mit der Pumpenwelle (70) verhindert und gleichzeitig ein Versetzen des Pumpengehäuses (100) in einer zur Längsachse der Pumpenwelle (70) rechtwinkligen Richtung gestattet.

11. Stromerzeugungsvorrichtung von einem Typ für erneuerbare Energie nach Anspruch 10, ferner aufweisend:
eine Druckölleitung, die einen Auslass (130) der Hydraulikpumpe (12) mit einem Einlass (132) des Hydraulikmotors (14) verbindet, und in der von der Hydraulikpumpe ausgegebenes Drucköl an den Hydraulikmotor strömt,
wobei die Druckölleitung wenigstens teilweise durch eine flexible Leitung (134) gebildet wird.

12. Stromerzeugungsvorrichtung von einem Typ für erneuerbare Energie nach einem der Ansprüche 7 bis 11,
wobei das erste Pumpenlager (106) und das zweite Pumpenlager (108) als Drucklager ausgeführt sind.

13. Stromerzeugungsvorrichtung von einem Typ für erneuerbare Energie nach einem der Ansprüche 1 bis 12, wobei die Vorrichtung ferner Folgendes aufweist:
ein Maschinenhaus (30) zur Unterbringung von wenigstens der Rotationswelle (6), der Hydraulikpumpe (12) und des Hydraulikmotors (14); und
einen Aufstelltisch, der über wenigstens ein elastisches Element und einen Dämpfungsmechanismus vom Maschinenhaus (30) gestützt wird, und auf dem der Hydraulikmotor (14) platziert ist.

14. Stromerzeugungsvorrichtung von einem Typ für erneuerbare Energie nach einem der Ansprüche 1 bis 13,
wobei eine innere umfängliche Fläche des zylindrischen Teils (72) so kegelig geformt ist, dass eine Dicke des zylindrischen Teil mit dem Abstand von der Nabe (4) geringer wird.

15. Stromerzeugungsvorrichtung von einem Typ für erneuerbare Energie nach einem der Ansprüche 1 bis 14, ferner aufweisend:
einen Gleitring (54), bereitgestellt im Innenraum (73) des zylindrischen Teils (72), zum elektrischen Verbinden eines stationären Seitenkabels (56) mit einem rotierenden, sich mit der Rotationswelle (6) drehenden Seitenkabel (57).

16. Stromerzeugungsvorrichtung von einem Typ für erneuerbare Energie nach Anspruch 2,
wobei das wenigstens eine Lager ein vorderes, näher an der Nabe (4) angeordnetes Lager (20) und ein hinteres, näher an der Pumpenwelle (70) angeordnetes Lager (22) aufweist,
wobei ein Lagergehäuse (21) des vorderen Lagers und ein Lagergehäuse (23) des hinteren Lagers durch einen Rohr-Verbindungsrahmen (40) miteinander verbunden sind.

17. Stromerzeugungsvorrichtung von einem Typ für erneuerbare Energie nach einem der Ansprüche 1 bis 16,
wobei die Stromerzeugungsvorrichtung von einem Typ für erneuerbare Energie ein Erzeuger einer Windkraftanlage ist, die Strom aus Wind in einer Form von erneuerbarer Energie erzeugt.

18. Verfahren zum Anbau einer Hydraulikpumpe (12) einer Stromerzeugungsvorrichtung von einem Typ für erneuerbare Energie, wobei eine Nabe (4) und eine an die Nabe (4) gekoppelte Rotationswelle (6) mit wenigstens einem Blatt (2) durch die über das wenigstens eine Blatt (2) empfangene erneuerbare Energie gedreht wird, und wobei die Drehung der Rotationswelle (6) zur Erzeugung von Strom über eine hydraulische, eine Hydraulikpumpe (12) und einen Hydraulikmotor (14) aufweisende Kraftübertragung an einen Generator (16) eingegeben wird, die Hydraulikpumpe (12) einen Drucköl erzeugenden Mechanismus (80) aufweist, der Drucköl erzeugt, und eine Pumpenwelle (70), die den Drucköl erzeugenden Mechanismus (80) hält, und die ein zylindrisches Teil (72) und einen nach innen gerichteten Flansch (74) aufweist, wobei das zylindrische Teil (72) den Drucköl erzeugenden Mechanismus (80) abstützt und einen Innenraum (73) auf einer inneren umfänglichen Seite aufweist, wobei der nach innen gerichtete Flansch (74) an einem Ende des zylindrischen Teils (72) angeordnet ist, wobei das Verfahren folgende Schritte aufweist:
Platzieren der Pumpenwelle (70) so, dass der nach innen gerichtete Flansch (74) gegen eine Endfläche eines Endes der Rotationswelle (6), die weiter von der Nabe (4) entfernt ist, gerichtet ist; und
Verbinden der Pumpenwelle (70) mit der Rotationswelle (6) durch teilweises Einsetzen wenigstens eines Befestigungselements (90) in das Ende der Rotationswelle, um den nach innen gerichteten Flanschs (74) zu durchdringen und sich in einer Befestigungsrichtung vom Innenraum (73) in Richtung zur Rotationswelle (6) zu erstrecken.

## Revendications

1. Appareil de production d'énergie électrique d'un type à énergie renouvelable, qui produit de l'énergie électrique à partir d'énergie renouvelable, l'appareil comprenant :
au moins une aube (2) ;
un moyeu (4) qui est entraîné en rotation avec la au moins une aube (2) par l'énergie renouvelable reçue via la au moins une aube ;
un arbre de rotation (6) qui est couplé au moyeu (4) ;
une pompe hydraulique (12) qui comprend un arbre de pompe (70) couplé à une extrémité de l'arbre de rotation (6) qui est sur un côté plus éloigné du moyeu, et un mécanisme de production d'huile sous pression (80) fixé à l'arbre de pompe (70) et produisant de l'huile sous pression par rotation de l'arbre de pompe,
au moins un moteur hydraulique (14) qui est entraîné par l'huile sous pression provenant de la pompe hydraulique (12); et
au moins un générateur (16) qui est entraîné par le au moins un moteur hydraulique (14),
dans lequel l'arbre de pompe (70) comprend une partie cylindrique (72) et une bride vers l'intérieur (74), la partie cylindrique (72) supportant le mécanisme de production d'huile sous pression (80) sur un côté circonférentiel externe et ayant un espace intérieur (73) sur un côté circonférentiel interne, la bride vers l'intérieur (74) étant disposée sur un côté plus à proximité de l'arbre de rotation (6) que de la partie cylindrique (72), et
dans lequel l'arbre de rotation (6) et l'arbre de pompe (70) sont couplés entre eux par au moins un élément de fixation (90) s'étendant dans une direction de fixation à partir de l'espace intérieur (73) vers l'arbre de rotation (6), le au moins un élément de fixation (90) pénétrant dans la bride vers l'intérieur (74) afin d'être partiellement inséré dans l'extrémité de l'arbre de rotation (6).

2. Appareil de production d'énergie électrique du type à énergie renouvelable selon la revendication 1, comprenant en outre :
au moins un palier (20, 22) qui supporte l'arbre de rotation (6) en rotation,
dans lequel l'arbre de rotation a un diamètre approximativement constant entre l'arbre de pompe (70) et l'un des au moins un palier (22) le plus proche de l'arbre de pompe.

3. Appareil de production d'énergie électrique du type à énergie renouvelable selon la revendication 1 ou 2, comprenant en outre :
une cale de friction (92) qui est agencée entre la surface d'extrémité de l'arbre de rotation (6) et la bride vers l'intérieur (74) et qui a au moins un trou (93) dans lequel le au moins un élément de fixation (90) pénètre.

4. Appareil de production d'énergie électrique du type à énergie renouvelable selon la revendication 3,
dans lequel le au moins un élément de fixation (90) comprend une pluralité d'éléments de fixation disposés de manière décalée dans une zone de fixation où la bride vers l'intérieur (74) et la surface d'extrémité de l'arbre de rotation (6) sont fixés ensemble, et
dans lequel le au moins un trou (93) comprend une pluralité de trous qui sont disposés de manière décalée correspondant aux éléments de fixation (90), et la cale de friction (92) est un élément annulaire formé d'une pluralité de segments (96) selon lesquels la cale de friction (92) est divisée au niveau de lignes de division (94) dont chacune s'incline par rapport à une direction radiale pour éviter les trous (93).

5. Appareil de production d'énergie électrique du type à énergie renouvelable selon la revendication 3 ou 4,
dans lequel la cale de friction (92) a un diamètre externe non inférieur à 1 mètre et un diamètre interne non inférieur à 0,5 mètre.

6. Appareil de production d'énergie électrique du type à énergie renouvelable selon l'une quelconque des revendications 3 à 5,
dans lequel la cale de friction (92) a des particules de diamant maintenues sur les deux surfaces.

7. Appareil de production d'énergie électrique du type à énergie renouvelable selon l'une quelconque des revendications 1 à 6,
dans lequel le mécanisme de production d'huile sous pression (80) comprend : une came annulaire (81) fixée sur une circonférence externe de la partie cylindrique (72) ; une pluralité de pistons (82) agencés radialement autour de la came annulaire (81) et amenés à faire un mouvement de va-et-vient par la came annulaire ; et un bloc-cylindres (85) comprenant des cylindres (84) qui forment des chambres de travail (83) pour produire l'huile sous pression avec chacun des pistons (82),
dans lequel le mécanisme de production d'huile sous pression (80) est logé dans un logement de pompe (100) qui comprend une coque cylindrique (102) recouvrant une périphérie externe du bloc-cylindres (85) et une paire de plaques d'extrémité (104, 105) prévues sur des extrémités respectives de la coque cylindrique, et
dans lequel la paire de plaques d'extrémité comprend une première plaque d'extrémité (104) qui est plus proche du moyeu (4) et une seconde plaque d'extrémité (105) qui est plus éloignée du moyeu (4), la première plaque d'extrémité (104) étant supportée via un premier palier de pompe (106) par une surface cylindrique de maintien de palier formée dans la bride vers l'intérieur (74), la seconde plaque d'extrémité (105) étant supportée via un second palier de pompe (108) par la circonférence externe de la partie cylindrique (72).

8. Appareil de production d'énergie électrique du type à énergie renouvelable selon la revendication 7,
dans lequel la première plaque d'extrémité (104) comprend une partie circonférentielle interne (110) qui est sur un côté circonférentiel interne et sur laquelle une bague externe du premier palier de pompe (106) est fixée et une partie circonférentielle externe (112) qui s'étend vers l'extérieur dans une direction radiale à partir de la partie circonférentielle interne vers la coque cylindrique (102), et
dans lequel la partie circonférentielle interne (110) comprend un passage interne (114) dans lequel l'huile sous pression produite dans la chambre de travail (83) s'écoule et la partie circonférentielle interne (110) est formée en étant plus épaisse que la partie circonférentielle externe (112).

9. Appareil de production d'énergie électrique du type à énergie renouvelable selon la revendication 8, l'appareil comprenant en outre :
une nacelle (30) pour loger au moins l'arbre de rotation (6) et la pompe hydraulique (12),
dans lequel le logement de pompe (100) est supporté sur un côté de nacelle via une partie de bras (120) raccordée au moins à la partie circonférentielle interne (110) de la première plaque d'extrémité (104).

10. Appareil de production d'énergie électrique du type à énergie renouvelable selon la revendication 9, l'appareil comprenant en outre :
un support de pompe (122) qui supporte le logement de pompe (100) du côté de la nacelle via la partie de bras (120) afin d'empêcher le logement de pompe (100) de tourner avec l'arbre de pompe (70) tout en permettant le déplacement du logement de pompe (100) dans une direction perpendiculaire à un axe de l'arbre de pompe (70).

11. Appareil de production d'énergie électrique du type à énergie renouvelable selon la revendication 10, l'appareil comprenant en outre :
un tuyau d'huile sous pression qui raccorde une sortie (130) de la pompe hydraulique (12) à une entrée (132) du moteur hydraulique (14) et dans laquelle l'huile sous pression amenée de la pompe hydraulique au moteur hydraulique s'écoule,
dans lequel le tuyau sous pression est au moins partiellement formé par un tuyau flexible (134).

12. Appareil de production d'énergie électrique du type à énergie renouvelable selon l'une quelconque des revendications 7 à 11,
dans lequel le premier palier de pompe (106) et le second palier de pompe (108) sont des paliers de butée.

13. Appareil de production d'énergie électrique du type à énergie renouvelable selon l'une quelconque des revendications 1 à 12, l'appareil comprenant en outre :
une nacelle (30) qui loge au moins l'arbre de rotation (6), la pompe hydraulique (12) et le moteur hydraulique (14) ; et
une table de placement qui est supportée par la nacelle (30) via au moins l'un parmi un élément élastique et un mécanisme d'amortissement et sur laquelle le moteur hydraulique (14) est placé.

14. Appareil de production d'énergie électrique du type à énergie renouvelable selon l'une quelconque des revendications 1 à 13,
dans lequel une surface circonférentielle interne de la partie cylindrique (72) se rétrécit progressivement de sorte qu'une épaisseur de la partie cylindrique devient plus petite avec la distance par rapport au moyeu (4).

15. Appareil de production d'énergie électrique du type à énergie renouvelable selon l'une quelconque des revendications 1 à 14, comprenant en outre :
une bague collectrice (54) qui est prévue dans l'espace intérieur (73) de la partie cylindrique (72) et qui raccorde électriquement un câble du côté fixe (56) à un câble du côté rotatif (57) qui tourne avec l'arbre de rotation (6).

16. Appareil de production d'énergie électrique du type à énergie renouvelable selon la revendication 2,
dans lequel le au moins un palier comprend un palier avant (20) disposé plus à proximité du moyeu (4) et un palier arrière (22) disposé plus à proximité de l'arbre de pompe (70), et
dans lequel un logement de palier (21) du palier avant et un logement de palier (23) du palier arrière sont raccordés entre eux par un bâti de raccordement tubulaire (40).

17. Appareil de production d'énergie électrique du type à énergie renouvelable selon l'une des revendications 1 à 16,
dans lequel l'appareil de production d'énergie électrique du type à énergie renouvelable est un générateur d'éolienne qui produit de l'énergie électrique à partir du vent sous la forme d'énergie renouvelable.

18. Procédé pour fixer une pompe hydraulique (12) d'un appareil de production d'énergie électrique d'un type à énergie renouvelable dans lequel un moyeu (4) et un arbre de rotation (6) couplé au moyeu (4) sont entraînés en rotation avec au moins une aube (2) par l'énergie renouvelable reçue via la au moins une aube (2) et la rotation de l'arbre de rotation (6) est transmise en entrée à un générateur (16) via une transmission hydraulique comprenant une pompe hydraulique (12) et un moteur hydraulique (14) pour produire l'énergie électrique, la pompe hydraulique (12) comprenant un mécanisme de production d'huile sous pression (80) qui produit de l'huile sous pression et un arbre de pompe (70) qui maintient le mécanisme de production d'huile sous pression (80) et qui comprend une partie cylindrique (72) et une bride vers l'intérieur (74), la partie cylindrique (72) supportant le mécanisme de production d'huile sous pression (80) et ayant un espace intérieur (73) sur un côté circonférentiel interne, la bride vers l'intérieur (74) étant disposée sur une extrémité de la partie cylindrique (72), le procédé comprenant les étapes consistant à :
placer l'arbre de pompe (70) de sorte que la bride vers l'intérieur (74) est opposée à une surface d'extrémité d'une extrémité de l'arbre de rotation (6) qui est plus éloignée du moyeu (4) ; et
raccorder l'arbre de pompe (70) à l'arbre de rotation (6) en insérant partiellement au moins un élément de fixation (90) dans l'extrémité de l'arbre de rotation pour pénétrer dans la bride vers l'intérieur (74) et s'étendre dans une direction de fixation à partir de l'espace intérieur (73) vers l'arbre de rotation (6).
